# EUROPEAN PATENT APPLICATION

(11) **EP 3 460 771 A1**
(43) Date of publication of application: **27.03.2019**
(21) Application number: 17813285.8
(22) Date of filing: 13.06.2017
(51) Int. Cl.: G08B 5/40, B60Q 7/00, G09F 19/22

(54) **WARNING FLARE HOLDING TOOL**

(30) Priority: 14.06.2016 JP 2016117566
(71) Applicant: Keiwa Inc., Tokyo 1030025 (JP)
(72) Inventor: KITAI, Yosuke, Tokyo 103-0025 (JP)
(74) Representative: Mewburn Ellis LLP
(86) International application number: PCT/JP2017/021734
(87) International publication number: WO 2017/217389

(57) **Abstract**

To provide a warning flare holding tool that is low cost, easy to use, and capable of further preventing a flame emitted from a warning flare and a high-temperature combustion residue from scorching a road surface. The above-described problem is solved by a warning flare holding tool (1) used while placed on a road surface (50) with a warning flare (30) held therein, and formed by a combustible compressed member (11) made from a compressed material containing at least pulp and a flame-proof material. The combustible compressed member (11) preferably contains a bonding agent. Further, preferably the warning flare holding tool (1) comprises a mounting surface (3) for mounting a warning flare (20), the mounting surface (3) being groove shaped or trough shaped, and comprises a body part (2) having a shape that is elongated on a flare leading end part side of the warning flare (30), and a space structure part (4) provided between the mounting surface (3) and the road surface (50). At least the body part (2) is an integrally molded body.

## Description

### Field of the Invention

The present invention relates to a warning flare holding tool used while placed on a road surface with a warning flare held therein.

### BACKGROUND ART

Arterial high-standard roads are roads exclusively for motor vehicles that form a nationwide transportation network. These roads include national expressways as well as general national roads exclusively for motor vehicles, the Honshu-Shikoku Bridge Expressway, and the like. When an accident or other emergency occurs, or road repair work, road sign installation, or road sign modification is carried out on an arterial high-standard road, or the like, a warning flare may be used to alert drivers of passing vehicles. Such a warning flare is a tubular tool that flares from one end, includes emergency warning flares for motor vehicles and road work warning flares, and is used to notify following vehicles and the like of dangers, obstacles, and the like.

A warning flare is used placed on a road surface while held in a warning flare holding tool. The warning flare holding tool is a member for preventing a flame emitted from the warning flare and high-temperature combustion residue from scorching a road surface. Various types such as indicated in Patent Documents 1 to 4, for example, have been proposed.

In Patent Document 1, there is proposed an installation tool for installing a signal flare on a road. The installation tool insulates the signal flare during flaring to protect the road, allows easy and reliable installation of the signal flare on the road, and facilitates clean-up after use. This installation tool is configured by forming a heat-insulating and easily breakable material into a structural body capable of mounting the signal flare, and providing a mounting groove allowing horizontal placement of the signal flare in the structural body. Then, in particular, the mounting groove has a shape that causes a flame port side of the signal flare to face upward.

In Patent Document 2, there is proposed a signal shell in which a road surface damage prevention body that prevents damage to the road surface caused by combustion of the signal shell is mounted. In this signal shell, the road surface damage prevention body is configured by a heat insulating layer that does not hinder vehicle travel, and a leading end part of the road surface damage prevention body is protruded from a combustion start part of the signal flare and fixed to the signal flare. Furthermore, a bank part is provided to a side surface of a bottom part, and a blowout prevention part is provided to the leading end.

In Patent Document 3, there is proposed a signal flare tube comprising a road surface damage prevention body made of a heat insulator consisting of light, non-voluminous, thin paper. This signal flare tube further comprises an ignition part on one end, a flare tube main body and a heat insulator in an interior thereof, and leg parts. The flare tube main body comprises a flame generating part that is connected to the ignition part and emits a high-bright flame, and the heat insulator is formed so as to allow reception of molten ash discharged from the flame generating part and is fixed to the flare tube main body. The leg parts are provided on a bottom surface of the heat insulator at a predetermined height.

In Patent Document 4, there is proposed a warning flare holding tool that achieves both improved heat-insulating performance with respect to the road surface and the advantage that clean-up is unnecessary. This warning flare holding tool is configured to include a flammable container comprising a mounting surface for mounting the warning flare, and a jelly-like non-flammable material stored in a flammable container. The jelly-like non-flammable material remains without flowing outward even when the flammable container burns along with the combustion of the warning flare, and receives the combustion residue.

### Patent Documents

Patent Document 1: Japanese Laid-Open Patent Application No. H05-290281
Patent Document 2: Japanese Laid-Open Patent Application No. 2001-319278
Patent Document 3: Japanese Laid-Open Patent Application No. 2004-164021
Patent Document 4: Japanese Laid-Open Patent Application No. 2011-170497

### SUMMARY OF THE INVENTION

### Problems to be Solved by the Invention

In a warning flare holding tool, the capability of further preventing the flame emitted from the warning flare and the high-temperature combustion residue from scorching the road surface has been in demand. Further, a warning flare holding tool this is lower cost and easy-to-use both in terms of material and structural form has been in demand.

The present invention has been made to solve the above-described problems. It is therefore an object of the present invention is to provide a warning flare holding tool that is low cost, easy to use, and capable of further preventing a flame emitted from a warning flare and a high-temperature combustion residue from scorching a road surface.

### Means for Solving the Problems

A warning flare holding tool according to the present invention is used while placed on a road surface with a warning flare held therein, and comprises a combustible compressed member containing at least pulp and a flame-proof material.

According to this invention, the combustible compressed member can be easily formed by injection molding, making it possible to obtain the warning flare holding tool at low cost. The combustible compressed member containing pulp easily burns by the flame emitted by the warning flare, making it possible to eliminate cases where a portion of the warning flare holding tool remains without burning to the extent possible. As a result, it is possible to easily collect cinders after the warning flare holding tool burns. Even when collection is not possible, the cinders can be dispersed as ash. The combustible compressed member containing flame-proof material makes it possible to suppress the generation of a combustion flame due to the contained flame-proof material. Therefore, the scorching of the road surface by combustion flame can be suppressed to the extent possible.

In the warning flare holding tool according to the present invention, the combustible compressed member contains a bonding agent. Examples of the bonding agent include a biodegradable starch and the like. According to this invention, it is possible to obtain a warning flare holding tool having favorable structural stability due to the bonding agent. Further, with a biodegradable starch and the like used as the bonding agent, even when cinders occur, the cinders can decompose and be dispersed.

Preferably, the warning flare holding tool according to the present invention comprises a mounting surface for mounting the warning flare, the mounting surface being groove shaped or trough shaped, and comprises a body part having a shape that is elongated on a flare leading end part side of the warning flare, and a space structure part provided between the mounting surface and the road surface. In such a warning flare holding tool, at least the body part is an integrally molded body.

According to this invention, in the warning flare holding tool comprising the body part and the space structure part, at least the body part is an integrally molded body, making it possible to provide a warning flare holding tool having a simple structure at low cost.

### Effect of the Invention

According to the present invention, it is possible to provide a warning flare holding tool that is low cost, easy to use, and capable of further preventing a flame emitted from a warning flare and a high-temperature combustion residue from scorching a road surface.

### BRIEF DESCRIPTION OF THE DRAWINGS

Fig. 1 is a schematic view illustrating an example of a warning flare holding tool.
Fig. 2A is a cross-sectional view of the warning flare holding tool illustrated in Fig. 1, and
Fig. 2B is a schematic view of the warning flare holding tool with a warning flare mounted.
Fig. 3A and Fig. 3B are explanatory views illustrating an example of the warning flare holding tool comprising a fixing member.
Fig. 4 is an overall schematic view illustrating an example of an injection molding device.

### Embodiments of the Invention

A warning flare holding tool according to the present invention is described below with reference to the drawings. The present invention is not limited to the following embodiments, and various modifications may be made.

### [Warning Flare Holding Tool]

A warning flare holding tool 1 is used primarily on arterial high-standard roads with a warning flare 30 held therein, and is placed on a road surface 50 to alert following vehicles and the like, in the event of an emergency or the like. Examples of functions required in the warning flare holding tool 1 include the following: (1) Prevent scorching of the road surface 50 by a flame 34 emitted from the warning flare 30 held therein. (2) Prevent scorching or staining of the road surface 50 by the high-temperature liquid residue flowing from the warning flare 30 at the time of combustion. (3) Burn along with the warning flare 30, without cinders. (4) Be low cost and easy to use. These required functions differ depending on the specifications required in the warning flare holding tool 1. Certain functions are required by all arterial high-standard roads where the warning flare holding tool 1 is used, and others are required by only designated arterial high-standard roads. Further, depending on the country in which the warning flare holding tool 1 is used, for example, even when all technical elements are required in Japan, all may be not required in other countries. Therefore, the warning flare holding tool 1 can be configured to include the above-described functions in part or in whole, in accordance with required specifications.

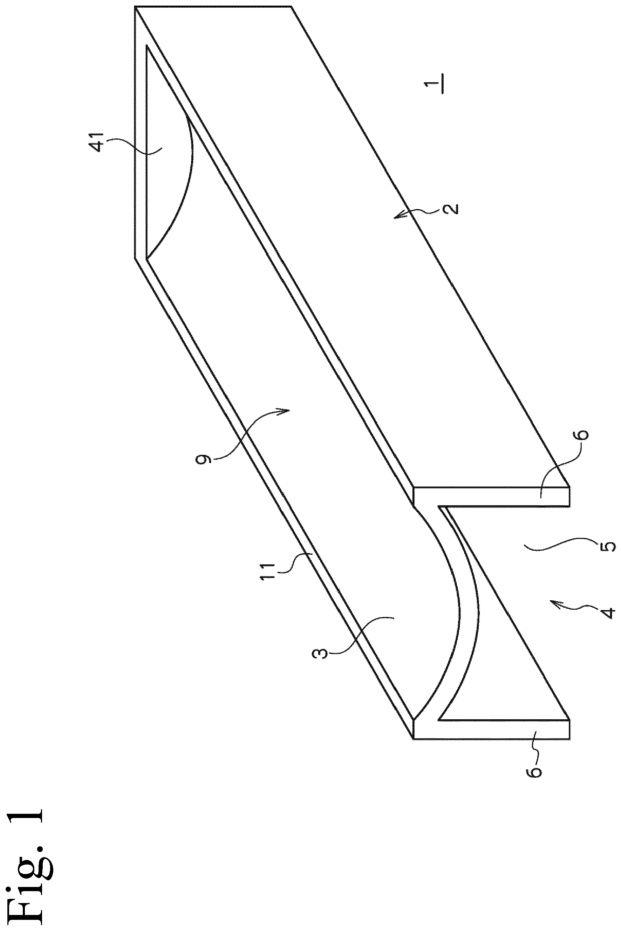

The warning flare holding tool 1 according to the present invention is used while placed on the road surface 50 with the warning flare 30 held therein, as illustrated in Fig. 1. This warning flare holding tool 1 comprises a combustible compressed member 11 containing at least pulp and a flame-proof material.

In the warning flare holding tool 1, the combustible compressed member 11 can be easily formed by injection molding, making it possible to obtain the warning flare holding tool at low cost. Further, the warning flare holding tool 1 is formed using the combustible compressed member containing pulp, and easily burns by a flame 34 emitted by the warning flare 30, making it possible to eliminate cases where a portion of the warning flare holding tool remain without burning to the extent possible. As a result, it is possible to easily collect cinders after the warning flare holding tool 1 burns. Even when collection is not possible, the cinders can be dispersed as ash. Furthermore, the combustible compressed member 11 containing the flame-proof material makes it possible to suppress the generation of a combustion flame due to the contained flame-proof material. Therefore, the scorching of the road surface by combustion flame can be suppressed to the extent possible. Note that, in the warning flare holding tool 1, various technical elements may be added in accordance with required functions.

The technical elements of the warning flare holding tool 1 are described below in detail with reference to the drawings.

### (Combustible compressed member)

The combustible compressed member 11 is the material that forms the warning flare holding tool 1, and is made from a compressed material containing at least pulp and a flame-proof material. Preferably, the combustible compressed member 11 is the material that forms at least a body part 2, and constitutes both the body part 2 and a space structure part 4.

The warning flare holding tool 1 desirably burns along with the warning flare 30 by the flame 34 emitted by the warning flare 30. Thus, the combustible compressed member 11 constituting the warning flare holding tool 1 is desirably not non-combustible, but combustible. When there is a portion that remains without being burned, the portion of the warning flare holding tool becomes garbage and may remain on the road surface 50. Therefore, when no residual garbage is required, desirably the combustible compressed member 11 easily burns and cases where a portion of the warning flare holding tool remains without burning are eliminated to the extent possible. As a result, it is possible to easily collect cinders after the combustible compressed member 11 burns. Even when collection is not possible, the cinders can be dispersed as ash.

The combustible compressed member 11 contains at least pulp and a flame-proof material. Pulp is generally a plant fiber separated for use primarily in paper, and is manufactured mainly using wood as a raw material. Pulp includes wood pulp and non-wood pulp. Wood pulp is manufactured by mechanically, semi-chemically or chemically treating wood made into small chips, and is preferably used. Non-wood pulp is difficult to obtain compared to wood pulp, and is thus not particularly preferred as the pulp used in the present invention, but can be used. Examples of the pulp include straw, rice straw, paper mulberry, oriental paper-bush, and the like. Further, the pulp may be pulp manufactured using used paper and cut-off paper as raw materials.

"At least" here means that the member may contain other materials within a range that does not hinder the effects of the present invention. Examples of other materials include one or two or more types selected from paper, plastic, fiber, metal foil, or the like. The content of the other materials can be adjusted as desired within a range that does not hinder the effects of the combustible compressed member 11, and is not particularly restricted.

While the combustible compressed member 11 contains a pulp having favorable combustibility, a material or a substance for further improving or slightly reducing the combustibility may be contained as desired within a range that does not hinder the effects of the combustible compressed member 11. Combustibility is preferably improved to allow the combustible compressed member 11 to be completely burned along with the warning flare 30, and examples of such materials and substances include paper, plastic, fiber, and the like. On the other hand, combustibility is preferably slightly reduced to allow suppression of damage to the road surface caused by combustion. Examples of such materials and substances include flame-proofing agents (for example, the flame-proof materials below), metal foil, and the like.

The combustible compressed member 11 contains a flame-proof material. The flame-proof material is a material that acts so that, when the combustible compressed member 11 is burned by the flame 34 emitted by the warning flare 30, the combustible compressed member 11 does not burn with a rise in flame. This flame-proof material makes it possible to suppress the generation of a combustion flame of the body part 2 made of the combustible compressed member 11. As a result, the scorching of the road surface 50 by the combustion flame of the body part 2 can be suppressed to the extent possible.

Examples of the flame-proof material include materials used as flame-retardant materials, such as organic flame retardants and inorganic flame retardants. Flame-retardant materials mainly used as flame-proof materials, unlike noncombustible materials and quasi-noncombustible materials, burn but do not burn readily. Generally, a flame-retardant material is a material having a property of burning while brought into contact with the heat source, and self-extinguishing when separated from the heat source. A slow burning material is a material having a property of starting to burn when brought into contact with a heat source, and continuing to burn even when separated from the heat source, but at a slow combustion rate. A combustible material is a material having a property of starting to burn when brought into contact with a heat source, and continuing to burn even when separated from the heat source. Based on this point of view, preferably the flame-proof material is contained in the combustible compressed member 11 in the present invention, thereby reducing the size of the flame without making the combustible compressed member 11 incombustible, slowing down the combustion rate and extending the time until burning ends (without slowing down the burn start time), or causing carbonization or incineration without generating flames.

Examples of the preferred flame-proof material include organic flame retardants such as a halogen-based or phosphorus-based retardant, and inorganic flame retardants such as a metal hydroxide or an antimony-based or red phosphorus-based retardant. Specifically, examples of the organic flame retardant include bromine-based ether, bromine-based oligomers or polymers, brominated polystyrene, chlorine, halogen-phosphorous, phosphoric acid ester, phosphorus-containing polyol, phosphorous-containing amine, melamine cyanurate, triazine compounds, guanidine compounds, silicon polymers, and the like. Further, examples of the inorganic flame retardant include aluminum hydroxide, magnesium hydroxide, red phosphorus, ammonium phosphate, ammonium carbonate, zinc borate, zinc stannate, molybdenum compounds, and the like. Furthermore, examples also include reactive vinyl group-containing flame retardants, epoxy group-containing flame retardants, hydroxyl group-containing flame retardants, carboxylic acid-containing flame retardants, odor oxidation monomers, odor oxidation epoxies, phosphoric acid ester, and the like.

The flame-proof material only needs to be contained in the combustible compressed member 11. In terms of the form of containment, the flame-proof material may be contained by compressing a pulp comprising the flame-proof material, impregnating the interior of the combustible compressed member 11 after the pulp is compressed, coating one surface or both surfaces of the combustible compressed member 11 after the pulp is compressed, or coating one surface or both surfaces and slightly permeating the interior of the combustible compressed member 11 after the pulp is compressed.

As the form of combustion of the combustible compressed member 11 containing the flame-proof material, for example, the surfaces as well as the interior of the combustible compressed member 11 can be made entirely flame-proof when the flame-proof material is contained or impregnated in the interior thereof. Further, when the flame-proof material is coated on one surface or both surfaces of the combustible compressed member 11, it is possible to achieve flame-proof performance on the coated surfaces. Furthermore, when the flame-proof material is coated on one surface or both surfaces of the combustible compressed member 11 and is slightly impregnated in the interior thereof as well, it is possible to achieve flame-proof performance mainly on the coated surfaces and impart flame-proof performance of the interior thereof as well.

The content in the combustible compressed member 11 when the flame-proof material is contained or impregnated in the combustible compressed member 11 varies depending on the type of flame-proof material and the required flame-proof performance as well, but can be generally set within a range of 5 to 20 mass%, inclusive, preferably within a range of 5 to 10 mass%, inclusive. Further, a coating thickness of the flame-proof material on the combustible compressed member 11 also varies depending on the type of flame-proof material and the required flame-proof performance as well, when the flame-proof material is coated on one surface or both surfaces of the combustible compressed member 11 and, while not particularly limited, may be generally about several to several tens of µm.

Examples of the method for impregnating the combustible compressed member 11 with the flame-proof material include using a solution of the flame-proof material dissolved in a solvent and immersing the pulp before compression in the solution, immersing the combustible compressed member 11 after compression in the solution, coating or spraying the combustible compressed member 11 with the solution, and the like. Further, examples of the method for applying the flame-proof material include using a solution of the flame-proof material dissolved in a solvent and coating or spraying the combustible compressed member 11 with the solution, and the like.

The combustible compressed member 11 preferably contains a bonding agent (also referred to as "binder"). As the bonding agent, a water-soluble polymer can be used. Examples of the water-soluble polymer include starch, agar, gelatin, and the like, and examples of chemical synthetic products used include polyacrylic acid, polyvinyl alcohol, polyethylene oxide, and the like. With the bonding agent, it is possible to obtain the warning flare holding tool 1 having favorable structural stability. Further, with a biodegradable starch and the like used as the bonding agent, even when cinders occur, the cinders can decompose and be dispersed. The bonding agent is contained in the combustible compressed member 11 in the amount required, and can be generally set within a range of 1 to 40 mass%, inclusive.

### (Body part)

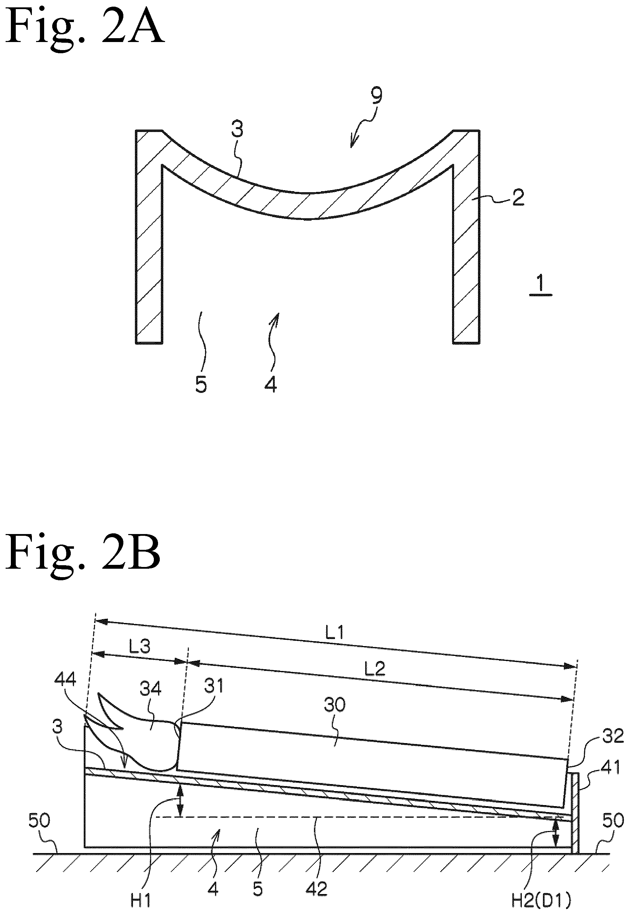

The body part 2, as illustrated in Fig. 1 and Fig. 2, comprises a mounting surface 3 for mounting the warning flare 30. The mounting surface 3 preferably has a groove shape or a trough shape. Further, the mounting surface 3 preferably has a shape in which the flare leading end part side of the warning flare 30 is elongated. With the flare leading end part side of the warning flare 30 elongated, it is possible to prevent the flame 34 of the warning flare 30 from coming into direct contact with the road surface 50. As a result, the scorching of the road surface 50 by the flame 34 of the warning flare 30 can be suppressed to the extent possible. The body part 2 is preferably an integrally molded body made of the combustible compressed member 11, making it possible to provide the warning flare holding tool having a simple structure at low cost.

As the structural form of the body part 2, preferably the flare leading end part side of the mounting surface 3 on which the warning flare 30 is placed is provided at a high position compared to a rear end part side when the warning flare 30 is mounted, as illustrated in Fig. 2B. With such a structural form, the flame 34 of the warning flare 30 is oriented upward, making it possible to prevent direct contact with the road surface 50.

A height HI, as illustrated using the representative example in Fig. 2B, may be a height sufficient enough that the flame 34 of the warning flare 30 does not come into direct contact with the road surface 50 and, while not particularly limited, may be, for example, 5 mm or greater. Note that when the height H1 is too high, the warning flare holding tool 1 inclines, impairing stability, and thus an upper limit of the height H1 is preferably set to about 15 mm. Note that the height H1 can also be adjusted depending on the degree of the elongated shape on the flare leading end part side of the warning flare 30 as well. For example, when a length L3 thereof is long, the flame 34 does not readily come into contact with the road surface 50, even when the height H1 here is low. On the other hand, when the length L3 is short, the flame 34 can be made to not readily come into contact with the road surface 50 by increasing the height H1 here.

A length L1 of the body part 2, as illustrated in Fig. 2B, is designed in accordance with a length L2 of the warning flare 30 to be mounted. Usually, an "abutting part 41" for abutting and positioning a rear end part 32 of the warning flare 30 is provided. In a state in which the rear end part 32 of the warning flare 30 is abutted against the abutting part 41, the body part 2 is elongated from the position of a leading end part 31 of the warning flare 30. This portion is also referred to as an elongated part 44. The length L3 of the elongated part 44 elongated at this time is designed as desired in accordance with a size and a length of the flame 34 emitted from the leading end part 31 of the warning flare 30. The length L3 can be, for example, set within a range of 150 to 500 mm, inclusive, preferably 250 to 380 mm, inclusive. With the body part 2 comprising the elongated part 44 having such a length L3, it is possible to prevent the flame 34 of the warning flare 30 from coming into direct contact with the road surface 50.

Note that the abutting part 41 is for abutting and positioning the rear end part 32 of the warning flare 30, and is provided in various forms to the body part 2. For example, as illustrated in Fig. 1, the abutting part 41 can be erected in a side wall shape or provided with a short protruding part on a rear end part side of the body part 2. However, the abutting part is not limited to this example. Note that the abutting part 41 having a side wall shape can also have a damming effect so as to prevent the liquid combustion residue generated upon combustion of the warning flare 30 from leaking out from the body part 2. As a result, the staining of the road surface 50 by the combustion residue can be suppressed to the extent possible.

In the body part 2, the mounting surface 3 for mounting the warning flare 30 has a groove shape or a trough shape (hereinafter referred to as "groove shape, etc. 9"). By providing a groove shape, etc. 9, the warning flare holding tool 1 can be held in the body part 2. Further, the groove shape, etc. 9 has a damming effect so as to prevent the high-temperature liquid combustion residue generated upon combustion of the warning flare 30 from leaking out from the body part 2. As a result, the staining of the road surface 50 by the combustion residue can be suppressed to the extent possible.

The groove shape, etc. 9 may be a groove shape or a trough shape. Generally, "groove shape" is a term used to express the concept of a long recess provided on a surface, and "trough shape" is a term used to express the concept of the form of an eaves trough. Here, without being bound to the meaning of formal terms, "groove shape" and "trough shape" mean a structural form functionally capable of holding the warning flare 30. The groove shape, etc. 9 having the curved surface shape illustrated in Fig. 1 and Fig. 2 is a so-called trough shape. The degree of the curved surface (radius of curvature and the like) at this time is not particularly limited as long as it is sufficient enough that the warning flare 30 is held by the mounting surface 3 having the curved surface.

### (Space structure part)

The space structure part 4 is preferably provided between the mounting surface 3 forming a portion of the body part 2, and the road surface 50. The space structure part 4 generates a temperature difference between the mounting surface 3 and the road surface 50, and acts so as to separate the mounting surface 3 and the road surface 50. As a result, even when the body part 2 burns by the flame 34 of the warning flare 30, a temperature difference exists with the road surface 50, making it possible to suppress the scorching of the road surface 50 to the extent possible. Further, because the mounting surface 3 and the road surface 50 are separated by a distance D1, it is possible to suppress the scorching of the road surface 50 caused by the combustion of the body part 2.

Examples of the form of the space structure part 4 are various. For example, as illustrated in Fig. 1, leg parts 6 may be formed using the combustible compressed member 11, and the space structure part 4 may be formed between the body part 2 and the road surface 50. Further, although not illustrated, the space structure part 4 may be formed surrounded by the combustible compressed member 11. A size of the space structure part 4 is closely related to the distance D1 between the mounting surface 3 and the road surface 50 and, when the leg parts 6 are formed using the combustible compressed member 11, becomes the height of the leg parts 6.

The space structure part 4 is preferably a structural form in which a gas after combustion (non-flammable gas such as carbon dioxide) enters and accumulates. Thus, the flame-proofing effect is enhanced, making it possible to suppress violent combustion, and the space structure part 4 generates airflow, making it possible to cause combustion throughout.

In terms of the structural form, the structure is desirably one in which the entered gas after combustion accumulates and is not readily discharged. Examples of the structural form include an integrated space structure forming the body part 2 and the space structure part 4 by the combustible compressed member 11, and a space structure with the road surface 50 (refer to Fig. 1). The typical gas after combustion is often carbon dioxide, but another flame-retardant gas can be generated depending on the types of the flame-proof material and the bonding agent contained in the combustible compressed member 11. While combustion requires the combustible compressed member 11, which is flammable substance, heat (high temperature), and an oxidant (oxygen), combustion of the combustible compressed member 11 can be suppressed by establishing the space structure part 4 in which a non-flammable gas such as carbon dioxide readily accumulates.

### (Fixing member)

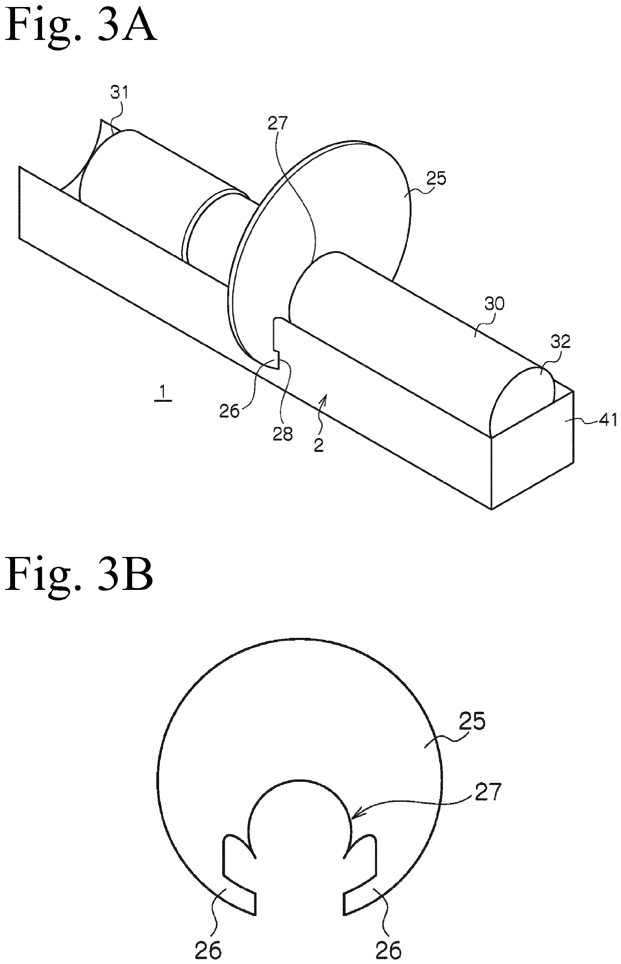

The warning flare holding tool 1, as illustrated in Fig. 3, preferably comprises a fixing member 25, as necessary. The fixing member 25 fixes the warning flare 30, and has a rollover preventing structure that always positions the mounting surface 3 of the warning flare holding tool 1 on the road surface side of the warning flare 30 to prevent rollover. While the fixing member 25 can be exemplified by the mode illustrated in Fig. 3B, the fixing member 25 may have any other shape as long as the member exhibits the above-described action.

In the example in Fig. 3B, the fixing member 25 is formed into a general disk shape. In the fixing member 25, cutouts are formed from a portion of the periphery to the interior, and the fixing member 25 comprises a pair of protruding pieces 26 and an opening 27 defined by these cutouts. The fixing member 25, as illustrated in Fig. 3A, is connected to the warning flare holding tool 1 by inserting the pair of protruding pieces 26 into a pair of locking holes 28 of the warning flare holding tool 1, and fitting the opening 27 onto the outer circumferential surface of the warning flare 30. Then, the fixing member 25 acts so as to fix the warning flare 30 to the warning flare holding tool 1, and can easily and reliably fix the warning flare 30 at a predetermined position of the warning flare holding tool 1. Thus, it is possible to more reliably prevent the flame 34 emitted from the warning flare 30 and the high-temperature combustion residue from coming into contact with the road surface 50. Further, it is possible to more effectively suppress scorching of the road surface 50 by the flame 34 emitted from the warning flare 30 and the high-temperature combustion residue.

### [Manufacturing Method]

The warning flare holding tool 1 is a combustible compressed member made from a compressed material containing at least pulp and a flame-proof material. As the manufacturing method, the compressed member can be obtained by injection molding. Methods for making the compressed member include the following: (1) Compressing pulp containing the flame-proof material by injection molding. (2) Impregnating the interior of the combustible compressed member 11 after compression of the pulp by injection molding with the flame-proof material. (3) Coating one surface or both surfaces of the combustible compressed member 11 after compression of the pulp by injection molding with the flame-proof material. (4) Coating one surface or both surfaces and slightly permeating the interior of the combustible compressed member 11 after compression of the pulp by injection molding with the flame-proof material. Note that preferably the compressed member contains a bonding agent, as necessary.

Examples of the method for causing the combustible compressed member 11 to contain the flame-proof material include using a solution of the flame-proof material dissolved in a solvent and immersing pellet-shaped raw material chips in the solution, immersing the combustible compressed member 11 after compression in the solution, coating or spraying the combustible compressed member 11 with the solution, and the like. Further, examples of the method for applying the flame-proof material include using a solution of the flame-proof material dissolved in a solvent and coating or spraying the combustible compressed member 11 with the solution, and the like. For impregnation, impregnation means such as a vacuum differential pressure method, a dispenser method, a simple immersion method, or a pressure feeding method can be used. For coating, coating means such as gravure coating, roll coating, or air knife coating can be used.

The mold used is a mold in which the warning flare holding tool 1 is processed into a desired shape, and the compressed material can be integrally molded by injection molding in this mold. The warning flare holding tool 1 thus manufactured has a high degree of freedom of shape, facilitating case size reduction and attachment to a fixing groove or the like. Furthermore, when the warning flare holding tool 1 contains a water-soluble bonding agent such as starch, the warning flare holding tool 1 has biodegradability and can also be completely decomposed in six months.

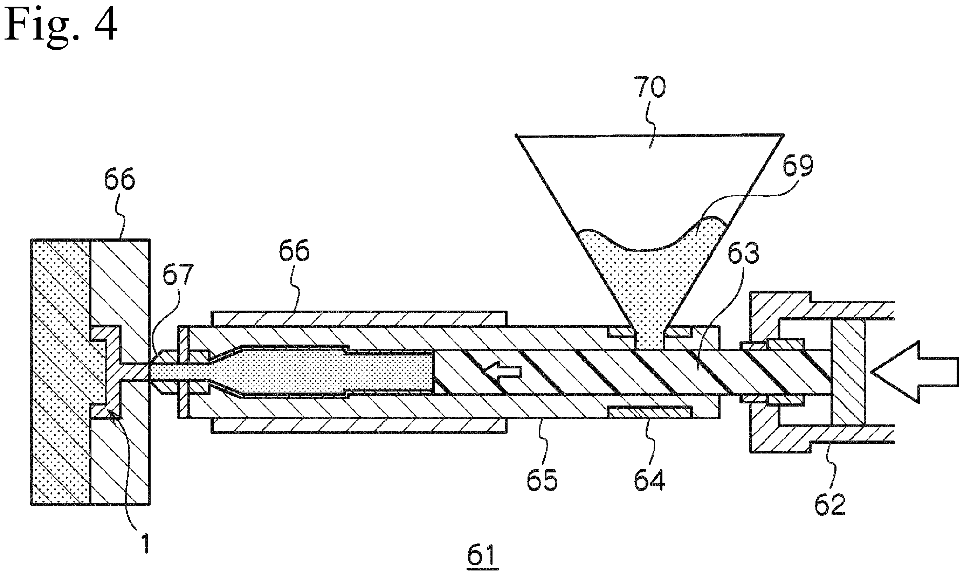

Fig. 4 is a representative example of an injection molding device. Injection molding is a method in which molding is performed by heating and melting a raw material 69, pressure-injecting the raw material 69 into a mold, and solidifying the raw material 69. In an injection molding machine 61 illustrated in Fig. 4, the pellet-shaped raw material 69 is supplied from a hopper 70 and melted in a cylinder 65 after being heated. In the cylinder 65, there is a screw 63 that rotates and moves back and forth. The raw material 69 is supplied to a front part of the cylinder 65 by the rotation of the screw 63 and is sequentially melted. At the time of injection, the screw 63 moves frontward inside the cylinder 65, injecting the molten material from a nozzle 67 of the front part of the cylinder 65 into a mold 68. The mold 68 is cooled with water or the like. Once the injected material is cooled and solidified, the mold is opened and the product is removed. This series of steps is automated, making it possible to mass-produce the molded product. Note that, in Fig. 4, reference numeral 62 denotes a hydraulic cylinder for rotating the screw 63, reference numeral 64 denotes cooling water, and reference numeral 66 denotes a heater.

### Examples

The present invention is more specifically described using examples.

### [Example 1]

The warning flare holding tool 1 illustrated in Fig. 1 and Fig. 2 was prepared. The warning flare holding tool 1 was made of the combustible compressed member 11, and pellet-shaped pulp chips immersed in a solution containing flame-proof material in advance were specified as the raw material 69 thereof. The raw material 69 was introduced into the hopper 70 of the injection molding machine 61 illustrated in Fig. 4, injection molding was performed, and the warning flare holding tool 1 made of the combustible compressed member 11 illustrated in Fig. 1 was obtained.

The external and internal dimensions of the warning flare holding tool 1 thus obtained were 60 mm in width and 350 mm in length, and 40 mm in width and 190 mm in length, respectively. The warning flare holding tool 1 is an integrated and compressed structural body formed by combining the body part 2 and the space structure part 4. The space structure part 4 is formed between the body part 2 and the road surface 50, with the leg parts 6 formed as illustrated in Fig. 2. The height was 15 to 30 mm. The warning flare 30, which was for 15-minute use, was mounted to this warning flare holding tool 1. The warning flare 30 was 280 mm in length and 32 mm in diameter and, after igniting the leading end part 31 so as to generate flame, was placed along with the warning flare holding tool 1 on the road surface 50 made of asphalt.

The warning flare 30 burned for approximately 15 minutes, and the warning flare holding tool 1 also burned for approximately 15 minutes. The warning flare holding tool 1 never burned violently with a rise in combustion flame. The warning flare holding tool 1 burned in its entirety without any portions unburned, and cinders remained. Traces of scorching caused by the combustion residue that flowed out from the warning flare 30 and the flame 34 of the warning flare 30 were not confirmed on the road surface 50 after the cinder were collected.

### [Example 2]

As the raw material 69, a bonding agent was further combined in addition to the pulp chips. As the bonding agent, a mixture of biodegradable starch and polyvinyl alcohol was used. The combined raw material 69 was introduced into the hopper of the injection molding machine. With all other steps being the same as those in Example 1, a warning flare holding tool made of a combustible compressed member was obtained. The dimensions of the warning flare holding tool were also the same as in Example 1. A 15-minutes warning flare similar to that in Example 1 was mounted to the obtained warning flare holding tool and, after igniting the leading end part so as to generate flame, was placed along with the warning flare holding tool on the road surface made of asphalt. The warning flare burned for approximately 15 minutes, and the warning flare holding tool also burned for approximately 15 minutes.

Three flaming tests were conducted in the same way. Thermocouples were installed in five locations at an interval of approximately 7 cm across a length of approximately 35 cm from the position where the warning flare holding tool was placed, and the temperature of the asphalt road surface was measured. The road surface temperatures at all five measured points were within a range of 51 to 125°C, and did not reach 150°C or greater, which is the temperature at which the asphalt is scorched. Note that while a mixture of starch and polyvinyl alcohol was used as a bonding agent in Example 2, the starch and the polyvinyl alcohol may be used alone or may be another bonding agent. Desirably, a water-soluble polymer is used.

### [Example 3]

A Cantabro test exists as a test for evaluating the impact that heat generated during combustion of the warning flare has on the asphalt road surface. The Cantabro test was implemented using five porous asphalt mixture samples a to e, each having a diameter of 10 cm and a thickness of 50 mm, based on NEXCO testing methods (Asphalt Pavement-Related Tests Vol. 2, Jul. 2012, Test Handbook B010, Form 245).

Using a 15-minute warning flare, the warning flare was installed in the warning flare holding tool prepared using the same method as in Example 2, and combustion tests were conducted for n=3 warning flares. The Cantabro test results after three combustion tests per porous asphalt mixture sample are shown in Table 1. According to the test results, a loss ratio of the porous asphalt mixture sample was 4.5% or less in each test as well. This result cleared the target loss ratio of the Cantabro test of 20% or less, successfully suppressing the asphalt loss to a sufficiently small amount, and making the effects of using the warning flare holding tool of the present invention clear.

### [Table 1]

**Table 1**

| | Loss Ratio (%) | | | | |
|---|---|---|---|---|---|
| | Sample a | Sample b | Sample c | Sample d | Sample e |
| n1 | 3.0 | 3.4 | 3.8 | 2.8 | 3.0 |
| n2 | 2.9 | 2.9 | 3.5 | 2.7 | 2.9 |
| n3 | 3.2 | 3.3 | 4.5 | 4.2 | 3.5 |
| No warning flare holding tool | - | 23.8 | 25.4 | 18.2 | - |

### Descriptions of Reference Numerals

1 Warning flare holding tool
2 Body part
3 Mounting surface
4 Space structure part
5 Space part
6 Leg part
9 Groove shape or trough shape (Groove shape, etc.)
11 Combustible compressed member
25 Fixing member
26 Pair of protruding pieces
27 Opening
28 Pair of locking holes
30 Warning flare
31 Flare leading end part
32 Rear end part
41 Abutting part
42 Reference plane
44 Elongated part
50 Road surface
L1 Length of body part
L2 Length of warning flare
L3 Length from leading end part of warning flare
H1 Difference in height at mounting surface (height on flare leading end part side relative to rear end part side)
H2 Height to body part (mounting surface)
D1 Distance between mounting surface and road surface
61 Injection molding machine
62 Hydraulic cylinder
63 Screw
64 Cooling water
65 Cylinder
66 Heater
67 Nozzle
68 Mold
69 Raw material
70 Hopper

## Claims

1. A warning flare holding tool used while placed on a road surface with a warning flare held therein, comprising:
a combustible compressed member made from a compressed material containing at least pulp and a flame-proof material.

2. The warning flare holding tool according to claim 1, wherein
the combustible compressed member contains a bonding agent.

3. The warning flare holding tool according to claim 1 or 2, further comprising:
a mounting surface for mounting the warning flare, the mounting surface being groove shaped or trough shaped;
a body part having a shape that is elongated on a flare leading end part side of the warning flare; and
a space structure part provided between the mounting surface and the road surface; wherein:
at least the body part is an integrally molded body.
